# EUROPEAN PATENT APPLICATION

(11) **EP 2 746 632 A1**
(43) Date of publication of application: **25.06.2014**
(21) Application number: 13193645.2
(22) Date of filing: 20.11.2013
(51) Int. Cl.: F16K 27/06, F16L 29/00, F16L 37/373

(54) **Non-dropping valve, mainly for devices for production of nanofibers by electrostatic spinning of polymer solutions**

(30) Priority: 20.12.2012 CZ 20120946
(71) Applicant: Technicka Univerzita v Liberci, 461 17 Liberec (CZ)
(72) Inventor: Sevcík, Ladislav, 46001 Liberec (CZ); Nýdrle, Milan, 46007 Liberec (CZ); Kovár , Radovan, 46015 Liberec (CZ); Petru , Michal, 46006 Liberec (CZ)
(74) Representative: Musil, Dobroslav

(57) **Abstract**

A non-dropping valve, especially for a device for the production of nanofibers by electrostatic spinning of polymer solutions, comprises two parts (431, 432) with spherical valves comprising sealing flanges (4310, 4320) abutting each other, in which spherical recesses are created. Mounted rotatably in the spherical recesses are valve balls (4311, 4321) provided with channels (4312, 4322), whereby in the axis of the spherical recess of the flange (4310, 4320) of the first part (431, 432) there is an orifice having the same diameter as that of the channel (4312, 4322) and in the valve ball (4321, 4311) of the second part (432, 431) a recess shaped as a spherical cap is created, having a diameter identical with that of the channel (4322, 4321) of the valve and having a size which is identical to the size of the cap recessed from the ball (4321, 4311) by creating the channel (4322, 4312), whereby when both parts get connected (431, 432) the cap of the valve ball (4311, 4321) of the first part (431, 432) abuts the spherical recess of the valve ball (4321, 4311) of the second part (432, 431).

## Description

### Technical field

The invention relates to a non-dropping valve, especially for a device for the production of nanofibers by electrostatic spinning of polymer solutions.

### Background art

Known solutions of non-dropping valves are based on the principle of shifting internal parts along the valve axis. During connecting and disconnecting of both parts of non-dropping valves, a relative shifting movement of the valve parts from each other or towards each other occurs, which results in the opening or closing of bypass paths. The disadvantages include a difficulty of the valves, a high resistance to flow and a plurality of small channels in which the carried medium subject to spinning tends to dry up. The principle of ball valves is known, nevertheless it is not used as non-dropping. Due to the fact that valves ensure bypassing the medium which is under a high voltage, it is necessary to use valves specially constructed without electronic elements.

The goal of the invention is to reduce the flow resistance of conventional non-dropping valves and increase their reliability by reducing the number of parts in which the liquid subject to spinning tends to dry up.

### Principle of invention

The aim of the invention has been reached by a non-dropping valve according to the invention, whose principle consists in that it comprise two parts with ball valves comprising sealing flanges, abutting each other, in which there are created spherical recesses. Mounted rotatably in the spherical recesses there are valve balls which are provided with channels, whereby in the axis of the spherical recess of the flange of the first part there is an orifice having the same diameter as that of the channel and in the valve ball of the second part a recess shaped as a spherical cap is created, having the same diameter as the channel of the valve and having the same size as the cap recessed from the ball by creating a channel, whereby upon connecting both parts the cap of the valve ball abuts by the first part to the spherical recess of the valve ball of the second part. The non-dropping character is ensured by the fact that between the connected valves there is almost a zero volume, whereby during the process of opening as well as during closing, the spherical surfaces, which tightly abut each other, perform shift movements on one another.

A non-dropping valve may be part of a conventional device of application of a polymer solution on a cord. Such device of application either comprises a reservoir of a polymer solution, or enables simplification of the device of application and creating a stationary reservoir connected to the body of the spinning chamber.

### Description of drawings

Examples of embodiment of a non-dropping valve according to the invention are schematically represented in the enclosed drawings, where Fig. 1 shows a device for the application of polymer on two cords comprising a reservoir of polymer in the application device, Fig. 2 shows a device for the application of polymer on two cords comprising a separated application device and a reservoir of polymer, Fig. 3 is a scheme of disconnected closed non-dropping valve, Fig. 4 is a scheme of a connected closed non-dropping valve, Fig. 5 is a scheme of a connected non-dropping valve in the first phase of opening and Fig. 6 is a scheme of a connected opened non-dropping valve.

### Examples of embodiment

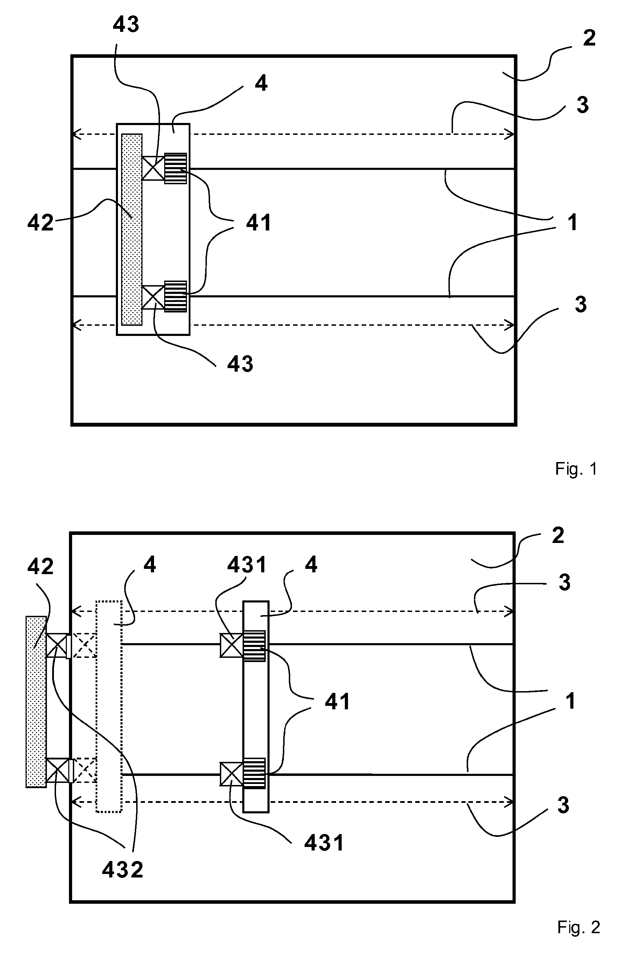

Fig. 1 shows a device for application of a polymer solution on two cords **1** which constitute the spinning electrodes arranged in a known manner in a spinning chamber **2.** The spinning electrodes are connected in a known unillustrated manner to one pole of a high voltage source. Arranged against the spinning electrodes in the spinning chamber **2** are collecting electrodes, between which and the spinning electrodes there is created an electrostatic field of high intensity, for example in such a manner that the collecting electrodes are connected to the opposite pole of the high voltage source. Created between the spinning electrodes and the collecting electrodes in the spinning chamber is a path for the passage of a substrate material, on which produced nanofibers are deposited during spinning.

Arranged parallel with the cords **1** in the spinning chamber **2** are travels **3** indicated in Fig. 1 by broken lines with arrows on both sides indicating the direction of the movement of the application device **4,** which is mounted displaceably in a known manner on the travels **3.** The application device **4** comprises application nozzles **41** and a reservoir **42** of polymer solution. Each spray nozzle **41** is interconnected with the reservoir **42** of the polymer solution by the non-dropping valve **43.**

In the embodiment according to Fig. 2 the application device **4** is alleviated and comprises only the application nozzles **41,** in which small unillustrated operating reservoirs of the polymer solution are created and are connected to the moving part **431** of the non-dropping valve **43.** The reservoir **42** of the polymer solution is mounted outside the spinning chamber **2,** the stationary parts **432** of the valves **43** being mounted on the reservoir **42** and being installed against the respective moving parts **431.** The amount of the polymer solution in the operating reservoir of the application nozzle **41** is sufficient at least for one double lift of the application device **4,** and after the polymer solution in the application nozzles **41** is consumed and during spinning the polymer applied on the cords **1,** the application device **4** parks by the wall of the spinning chamber **2** and the moving part **431** of the non-dropping valve **4** gets connected to its stationary part **432.** The non-dropping valve **4** opens, the operating reservoir of the application nozzle **41** is filled with the required amount of the polymer solution and the valve **4** is closed. The application device **4** is ready to continue application of the polymer solution on the cords **1.**

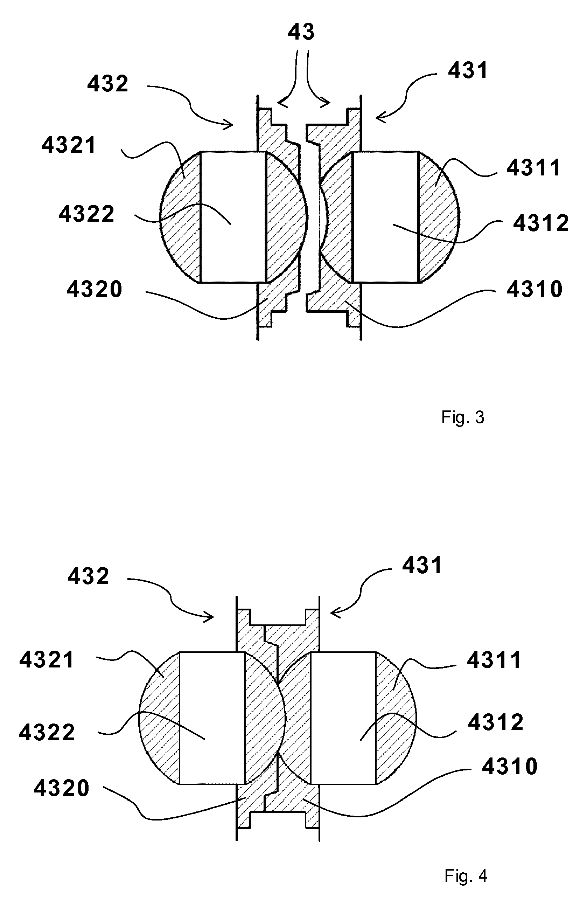

Figures 3 - 6 schematically represent the functional part, that is the opening and closing part of the non-dropping valve **43.**

Fig. 3 refers to the embodiment of the application device according to Fig. 2, in which the moving part **431** of the non-dropping valve **43** is mounted on the application device **4** and the stationary part **432** is mounted on the reservoir **2** of the polymer solution, which is located outside the spinning chamber **2,** whereby the stationary part **432** of the valve extends to the spinning chamber **2** and is provided by a sealing flange **4320** of the stationary part **432,** in which at the side of the reservoir **42** is created aspherical recess, in which is rotatably mounted a valve ball **4321** of the stationary part **432,** in which a channel **4322** is formed. In the axis of the spherical recess of the sealing flange **4320** of the stationary part **432** is created an orifice having the same diameter as the channel **4322.** The sealing flange **4320** of the stationary part **432** is from its outer side adapted for tight abutting of the sealing flange **4310** of the moving part **431** of the valve **43** and the valve ball **4321** of the stationary part **432** overlaps by its sealing cap the front surface of the sealing flange **4320** of the stationary part **432.** The size of the sealing cap is the same as that of the cap recessed from the ball **4321** by creating the channel **4322.**

The moving part **431** of the non-dropping valve **43** is provided with a sealing flange **4310,** which is mounted fixedly on the application device **4** and in which from the side of the application nozzle **41** a spherical recess is created, in which is rotatably mounted a valve ball **4311** of the moving part **431,** in which a channel **431** .is created. In the axis of the spherical recess of the sealing flange **4310** of the moving part **431** an orifice is created, having a diameter identical with that of the channel **4312.** The valve ball **4311** of the moving part **431** is in its solid portion, which is in the closed position of the moving part **431** of the valve **43,** in the orifice of the sealing flange **4310** of the moving part **431** fitted with a recess in the shape of a spherical cap having a diameter identical with that of the channel **4312** and having the same size as the sealing cap of the valve ball **4321** of the stationary part **432** of the valve **43.**

Fig. 3 represents a non-dropping valve **43** before the moving part **431** abuts the stationary part **432,** when both parts of the valve **43** are closed and sealed by spherical surfaces of the respective flanges and valve balls.

Fig. 4 shows a non-dropping valve **43** after the moving part **431** abuts the stationary part **432,** whereby the sealing cap of the valve ball **4321** of the stationary part **432** abuts the spherical recess of the valve ball **4311** of the moving part **431** and both valve balls are in the closed position.

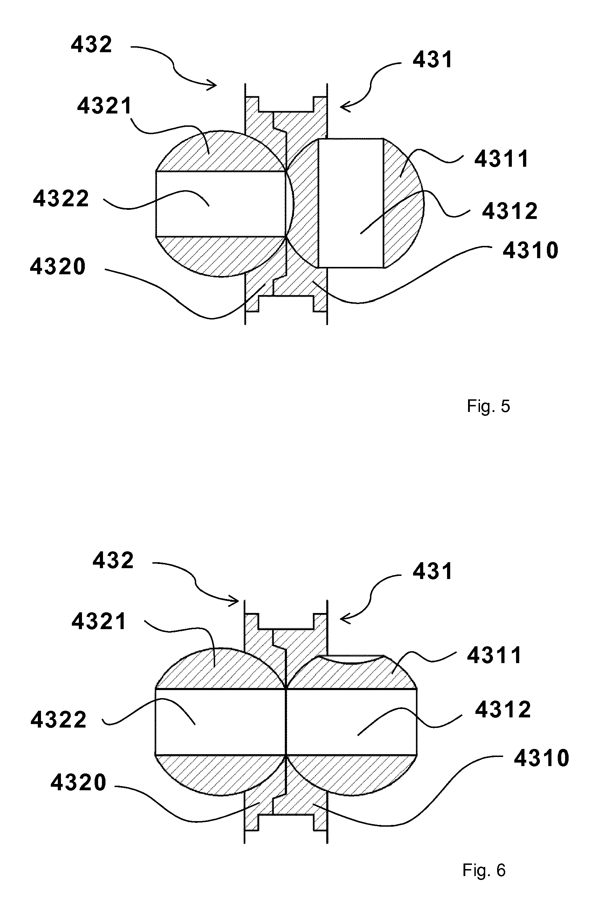

Fig. 5 shows a non-dropping valve **43,** in which the valve ball **4321** of the stationary part **432** is in the open position, and Fig. 6 represents a non-dropping valve **43,** in which both valve balls **4311** and **4321** are in the open position.

From Figures 3 to 6 it is clearly seen how in the embodiment of the application device **4** according to Fig. 2 the moving part **431** is being connected to the stationary part **432** of the non-dropping valve **43** and how it is being opened, whereby it is apparent that the closing and disconnecting of the moving part **431** is reversed.

The non-dropping valve **43** can also be used on the application device **4** according to Fig. 1. In this case both parts of the valve **43** are permanently connected and they only open and close according to Fig. 4 to 6. Also, both parts of the valve constitute a stationary part of the application device.

It is apparent to those skilled in the art that the arrangement of the two parts of the non-dropping valve can be mutually substituted and, if needed, their construction can be modified and adapted to specific technological requirements.

### List of references

- 1: cord of spinning electrode
- 2: spinning chamber
- 3: travel of the application device
- 4: application device
- 41: application nozzles
- 42: reservoir of polymer solution
- 43: non-dropping valve
- 431: moving part of the valve
- 4310: flange of the moving part
- 4311: valve ball of moving part
- 4312: channel of the valve ball of the moving part
- 432: stationary part of the valve
- 4320: flange of the stationary part
- 4321: valve ball of the stationary part
- 4322: channel of the valve ball of the stationary part

## Claims

1. A non-dropping valve, especially for a device for production of nanofibers by electrostatic spinning of polymer solutions, **characterized in that** it comprises two parts (431, 432) with spherical valves comprising sealing flanges (4310, 4320) abutting each other, in which there are created spherical recesses, in which there are mounted rotatably valve balls (4311, 4321) provided with channels (4312, 4322), whereby in the axis of the spherical recess of the flange (4310, 4320) of the first part (431, 432) there is an orifice having the same diameter as that of the channel (4312, 4322) and in the valve ball (4321, 4311) of the second part (432, 431) a recess shaped as a spherical cap is created having a diameter identical with that of the channel (4322, 4321) of the valve and having the same size as that of the cap recessed from the ball (4321, 4311) by creating the channel (4322, 4312), whereby when both parts get connected (431, 432) the cap of the valve ball (4311, 4321) of the first part (431, 432) abuts the spherical recess of the valve ball (4321, 4311) of the second part (432, 431).

2. A non-dropping valve according to Claim 1, **characterized in that** both parts (431, 432) of the valve are mounted on an application device (4) between the reservoir (42) of the polymer solution and the application nozzle (41).

3. A non-dropping valve according to Claim 1, **characterized in that** the part (431) constitutes the moving part and is mounted on the application device (4) and the part (432) is arranged as stationary and is connected to the reservoir (2) of the polymer solution.
